# EUROPÄISCHE PATENTSCHRIFT

(11) **EP 3 672 918 B1**
(45) Veröffentlichungstag und Bekanntmachung des Hinweises auf die Patenterteilung: **20.10.2021**
(21) Anmeldenummer: 18742479.1
(22) Anmeldetag: 17.07.2018
(51) Int. Cl.: C03B 35/26, C03B 25/06, C03B 35/06

(54) **VORRICHTUNG ZUM PRÄZISEN POSITIONSGETREUEN TRANSPORT VON EMPFINDLICHEN HEISSEN GLASWAREN**
DEVICE FOR THE PRECISE POSITIONALLY ACCURATE TRANSPORT OF SENSITIVE HOT GLASSWARE
DISPOSITIF POUR LE TRANSPORT PRÉCIS À POSITIONNEMENT EXACT D'OBJETS EN VERRE CHAUDS SENSIBLES

(30) Priorität: 25.08.2017 DE 202017105109 U
(43) Veröffentlichungstag der Anmeldung: 01.07.2020
(73) Patentinhaber: Ernst Pennekamp GmbH & Co. OHG, 58256 Ennepetal (DE)
(72) Erfinder: HOFF, Klaus-Uwe, 42499 Hückeswagen (DE)
(74) Vertreter: Buse, Mentzel, Ludewig Patentanwaltskanzlei
(86) Internationale Anmeldenummer: PCT/EP2018/069367
(87) Internationale Veröffentlichungsnummer: WO 2019/037957

(56) Entgegenhaltungen:
- EP-A1- 0 908 419
- EP-A1- 0 908 419
- EP-A1- 3 184 471
- EP-A1- 3 184 471
- WO-A1-2017/093077
- GB-A- 2 108 456
- GB-A- 2 108 456
- GB-A- 2 270 060
- GB-A- 2 270 060
- US-A1- 2007 221 482
- US-A1- 2007 221 482

## Beschreibung

Die Erfindung betrifft eine Vorrichtung zum präzisen positionsgetreuen Transport von empfindlichen heißen Glaswaren gemäß dem Oberbegriff von Patentanspruch 1. Unter empfindlichen Glaswaren werden insbesondere Glasartikel aus Röhrenglas, wie Phiolen, Spritzen, Karpulen und Ähnliches verstanden, welche beispielsweise im Bereich der Medizin und Pharmazie eingesetzt werden. An die Qualität und Rückverfolgbarkeit dieser Glaswaren werden höchste Anforderungen gestellt. Die Glaswaren werden dabei zunächst geformt und dann auf ein Transportband verbracht. Nach dem Formprozess werden diese Glaswaren im nächsten Bearbeitungsschritt in einen Entspannungsofen gebracht, um Spannungen im Glas, die sonst beim Abkühlen entstehen können, zu verhindern.

Dazu werden die Glasartikel auf einem Transportsystem des Entspannungsofens abgelegt und präzise durch den Ofentunnel gefahren. Das Transportsystem besteht dabei üblicherweise aus einem umlaufenden Transportband aus rundgelochten und geformten Blechstreifen, auf welchem die Glasartikel anordbar sind, während das Transportband durch seitlich angeordnete Ketten (Antriebskette) angetrieben wird. Produktbedingt werden die Glasartikel auf sogenannten Stegen abgelegt.

Im Ofentunnel selbst sind dann unterhalb und oberhalb des Transportsystems Heizungssysteme angeordnet. Der Wärmetransfer von den Heizungssystemen zum Produkt erfolgt hierbei üblicherweise in einer Mischung aus Strahlung und natürlicher Konvektion.

Die Lochungen in den Blechstreifen ermöglichen den Wärmetransfer der unterhalb angeordneten Heizungssysteme zu den Glasartikeln. Außerdem wird durch die Lochung die aufzuheizende Masse des Transportsystems reduziert. Üblicherweise sind die Lochungen dabei als viele, versetzt zu einander angeordneten Rundlochungen ausgeführt, wobei diese so ausgestaltet sind, dass ein möglichst großer und homogener Durchsatz des Wärmetransfers zu jedem Bereich der Glasartikel gewährleistet ist. Der maximale Durchmesser dieser Lochung ist dabei so bemessen, dass weder Glasartikel hindurch fallen können noch in ihrer Positionierung beeinträchtigt werden.

WO 2017/093077 A1 offenbart verschieden gestaltete Transportbänder, die aus mehreren Artikelträgern oder Trägerleisten ausgebildet sind.

Bei bekannten Transportsystemen kann es jedoch zu folgenden Nachteilen kommen:
- Bei dem Erwärmen und Abkühlen der Blechleisten entstehen temporäre Spannungen. Diese entstehen dadurch, dass die Lochungen den Wärmefluss innerhalb der Blechleiste behindern und sich dadurch temporär Bereiche unterschiedlicher Temperatur bilden. Der Wärmefluss muss sich quasi im "Zick-Zack" durch das Lochbild kämpfen und wird somit verlangsamt.
- Als Folge der Spannungen verbiegen sich die Blechleisten temporär um mehrere Millimeter in horizontaler und/oder vertikaler Richtung.
- Die Höhe der Verbiegung kann im Extremfall bis zu mehrere Zentimeter betragen und ist dabei abhängig vom Widerstandsmoment der Blechleiste, der Länge der Blechleiste, des thermischen Ausdehnungskoeffizienten und der Wärmeleifähigkeit des verwendeten Materials sowie der Anordnung und der Anzahl der Bohrungen in der Blechleiste.
- Durch das Verbiegen ändern sich die Gefügeeigenschaften der Blechleisten, es entsteht harter Verformungsmartensit, der zu einer dauerhaften, plastischen Verformung der Blechleisten führt.
- Je nach Größe der Verbiegung verlieren die auf dem Transportsystem befindlichen Waren ihre Position und können nicht mehr automatisiert abgenommen werden. Auch eine Kollision mit Bestandteilen des Ofens, insbesondere am Tunnel-Eingang- bzw. -Ausgang oder auch mit anderen Waren kann vorkommen. Dies führt zu einer Beschädigung der Waren.

Der Erfindung liegt die Aufgabe zugrunde, die vorerwähnten Nachteile zu vermeiden und den Wärmefluss innerhalb der Transportsystems nicht oder möglichst wenig zu behindern. Diese Aufgabe wird durch die kennzeichnenden Merkmale von Anspruch 1 gelöst, denen folgende besondere Bedeutung zukommt.

Das Transportband ist erfindungsgemäß so ausgestaltet, dass die Öffnungen als längs oder quer angeordnete längliche Ausnehmungen im Transportband befindlich sind, so dass der Wärmefluss innerhalb des Materials nicht von den Öffnungen behindert oder unterbrochen wird. Erfindungsgemäß kann so der Wärmefluss ungehindert sowohl in Längs- als auch in Querrichtung des Transportbandes erfolgen, wobei der Wärmefluss dabei quasi seitlich an den Öffnungen vorbei erfolgt. Die Öffnungen sind dabei so beschaffen, dass sie einen guten Wärmetransfer von dem unterhalb des Transportbandes angeordneten Heizsystem zu den Glaswaren ermöglichen.

In einem ersten bevorzugten Ausführungsbeispiel sind die Öffnungen als mehrere parallel zueinander angeordnete Reihen von Langlöchern ausgebildet. Hierbei kann das Transportband beispielsweise aus gestanztem Blech bestehen. Durch die Langlöcher kann dann ein genügender Wärmetransport vom Heizsystem zu den Glaswaren stattfinden. Der Wärmetransport innerhalb des Transportbandes wird aber nicht durch die Öffnungen behindert. Auch ein "Zick-Zack"-Weg ist nicht notwendig, da der Wärmetransport seitlich an den länglichen Öffnungen vorbei stattfindet. Bevorzugterweise sind bei diesem Ausführungsbeispiel die Öffnungen senkrecht zur Bewegungsrichtung des Transportbandes angeordnet.

Eine alternative und ebenfalls bevorzugte Ausführungsform sieht vor, dass das Transportband aus mehreren miteinander verbundenen Drahtelementen besteht, zwischen denen sich die Öffnungen befinden. Hierbei ergibt sich eine gitterartige Struktur des Transportbandes. Da keine Unterbrechungen innerhalb eines Drahtelementes vorhanden sind, wird der Wärmefluss nicht behindert.

Bevorzugterweise sind bei diesem Ausführungsbeispiel die Öffnungen quer zur Bewegungsrichtung des Transportbandes angeordnet.

Bei beiden Ausführungsformen können Stege zur Aufnahme und Positionierung der Glaswaren vorgesehen sein. Auf diesen Stegen kann dann je eine Glasware mit einem Teil, beispielsweise bei einem Glasfläschchen mit dem Hals, aufliegen.

Bevorzugterweise handelt es sich bei dem Transportband um ein umlaufendes Transportband. Diese haben sich in der Glasindustrie bewährt und sind praktisch in der Anwendung. Der Antrieb des Transportbandes kann dabei beispielsweise mittels einer oder mehrerer Antriebsketten erfolgen.

In den Zeichnungen ist die Erfindung in zwei Ausführungsbeispielen dargestellt. Es zeigen:
- Fig. 1:: Einen Ausschnitt aus einem Transportband nach dem Stand der Technik in perspektivischer Draufsicht,
- Fig. 2:: Ein erfindungsgemäßes Transportband in einer ersten Ausführungsform in perspektivischer Draufsicht,
- Fig. 3:: Ein erfindungsgemäßes Transportband in einer zweiten Ausführungsform in perspektivischer Draufsicht.

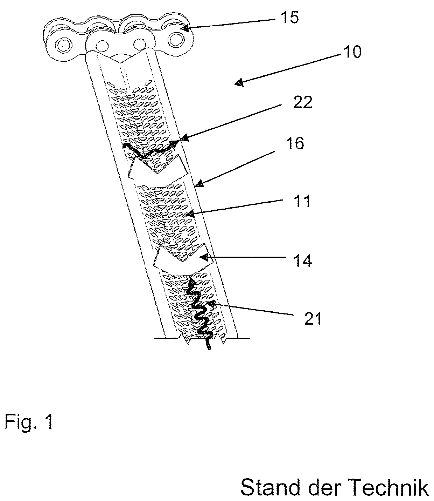

Fig. 1 zeigt einen Ausschnitt aus einem Transportband 10 nach dem Stand der Technik. Es ist ein Artikelträger 16 gezeigt, der eine Vielzahl von als Rundlöchern 11' ausgeführten Öffnungen aufweist. Diese Rundlöcher 11' sind versetzt zueinander angeordnet. Sowohl in Längs- 21 als auch in Querrichtung 22 muss sich der Wärmefluss, der durch das Material des Transportbandes 10 stattfindet, einen Weg um diese Rundlöcher 11' herum suchen. Exemplarisch ist der Wärmefluss in Längsrichtung 21 und Querrichtung 22 in Fig. 1 als fettgedruckte Linie dargestellt. Durch diesen "Zick-Zack"-Weg des Wärmeflusses kommt es zu den eingangs genannten Problemen und die Artikelträger 16 verbiegen sich.

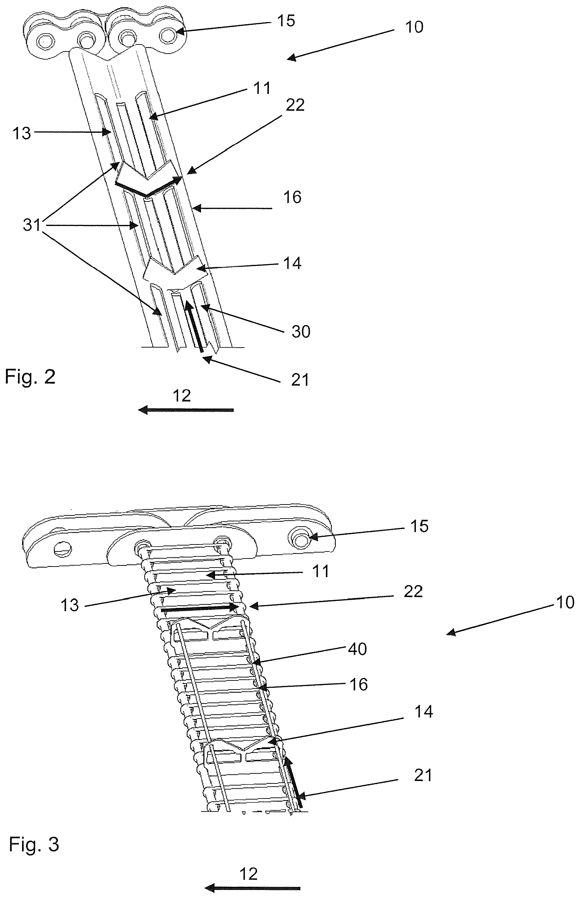

Fig. 2 zeigt jetzt eine erste Ausführungsform der Erfindung. Das Transportband 10 besteht aus einem geformten Blech, in welches mehrere Langlöcher 30 in Reihen 31 eingebracht wurden. Die Langlöcher 30 sind hier quer zur Transportrichtung 12 des Transportbandes 10 angeordnet. Bei der thermischen Belastung des Transportbandes 10 kann der Wärmefluss nunmehr in Längsrichtung 21 und in Querrichtung 22 stattfinden und fließt dabei quasi an den Langlöchern 30 seitlich vorbei. Eine thermische Deformation wird somit minimiert.

Des Weiteren erkennt man in Fig. 2 noch eine Antriebskette 15, die dem Antrieb des aus Artikelträgern 16 bestehenden Transportbandes 10 dient und mehrere Stege 14, auf welchen sich die auf dem Transportband 10 befindlichen Glaswaren abstützen können.

Eine weitere Ausführungsform des erfindungsgemäßen Transportbandes 10 zeigt Fig. 3. Hier wird das Transportband 10 aus mehreren Drahtelementen 40 gebildet, welche zwischen sich die länglichen Löcher 13 aufweisen. Es entsteht somit eine gitterartige Struktur. Da die einzelnen Drahtelemente 40 durchgehend und nicht unterbrochen ausgebildet sind, kann der Wärmefluss durch diese Drahtelemente 40 ebenfalls in Längsrichtung 21 und in Querrichtung 22 erfolgen. Auch bei dieser Ausführungsform sind wieder eine Antriebskette 15 und mehrere Stege 14 vorgesehen.

### Bezugszeichenliste:

- 10: Transportband
- 11: Öffnung in 10
- 11': Rundloch (Stand der Technik)
- 12: Transportrichtung von 10
- 13: längliches Loch
- 14: Steg
- 15: Antriebskette
- 16: Artikelträger
- 21: Wärmefluss in Längsrichtung
- 22: Wärmefluss in Querrichtung
- 30: Langloch
- 31: Reihe
- 40: Drahtelement

## Patentansprüche

1. Vorrichtung zum präzisen positionsgetreuen Transport von empfindlichen heißen Glaswaren,
mit einem Transportsystem, welches ein Transportband (10) umfasst, auf welchem die Glaswaren anordbar sind,
wobei das Transportband (10) Öffnungen (11) aufweist, die einen Luft-und Temperaturaustausch zwischen der Umgebung und den auf dem Transportband (10) befindlichen Glaswaren ermöglichen,
**dadurch gekennzeichnet,**
**dass** die Öffnungen (10) als längs oder quer zur Transportrichtung (12) des Transportbandes (10) angeordnete längliche Löcher (13) ausgeführt sind,
die so in dem Transportband (10) angeordnet sind, dass der Wärmefluss innerhalb des Materials des Transportbandes (10) nicht von diesen Öffnungen (11) behindert oder unterbrochen wird, sondern dass sowohl in Längs- (21) als auch in Querrichtung (22) des Transportbandes (10) der Wärmefluss ungehindert erfolgen kann.

2. Vorrichtung nach Anspruch 1, **dadurch gekennzeichnet, dass** die Öffnungen (11) als mehrere parallel zueinander angeordnete Reihen (31) von Langlöchern (30) ausgebildet sind.

3. Vorrichtung nach Anspruch 2, **dadurch gekennzeichnet, dass** die Öffnungen (11) senkrecht zur Transportrichtung (12) des Transportbandes (10) angeordnet sind.

4. Vorrichtung nach Anspruch 1, **dadurch gekennzeichnet, dass** das Transportband (10) aus mehreren miteinander verbundenen Drahtelementen (40) besteht, zwischen denen sich die Öffnungen (11) befinden.

5. Vorrichtung nach Anspruch 4, **dadurch gekennzeichnet, dass** die Öffnungen (11) quer zur Transportrichtung (12) des Transportbandes (10) angeordnet sind.

6. Vorrichtung nach einem der Ansprüche 1 bis 5, **dadurch gekennzeichnet, dass** am Transportband (10) ein oder mehrere Stege (14) zur Aufnahme der Waren angeordnet sind.

7. Vorrichtung nach Anspruch 6, **dadurch gekennzeichnet, dass** das Transportband (10) aus mehreren Artikelträgern (16) besteht, die die Öffnungen (11) aufweisen und jeweils einen oder mehrere Stege (14) umfassen.

8. Vorrichtung nach einem der Ansprüche 1 bis 7, **dadurch gekennzeichnet, dass** das Transportband (10) umlaufend ausgebildet ist.

9. Vorrichtung nach einem der Ansprüche 1 bis 8, **dadurch gekennzeichnet, dass** das Transportband (10) durch seitlich angeordnete Antriebsketten (15) angetrieben wird.

## Claims

1. Device for the precise, accurately positioned transport of sensitive hot glassware,
with a transport system which comprises a conveyor belt (10) on which the glassware can be arranged,
wherein the conveyor belt (10) has openings (11) enabling an exchange of air and temperature between the environment and the glassware located on the conveyor belt (10),
**characterised in that**
the openings (10) are designed as elongated holes (13) arranged longitudinally or transversely to the transport direction (12) of the conveyor belt (10),
and which are arranged in the conveyor belt (10) in such a way that the heat flow within the material of the conveyor belt (10) is not hindered or interrupted by these openings (11), but that both in the longitudinal (21) and in the transverse direction (22) of the conveyor belt (10) the heat flow can take place in an unhindered manner.

2. Device according to claim 1, **characterised in that** the openings (11) are designed as several rows (31) of elongated holes (30) arranged parallel to one another.

3. Device according to claim 2, **characterised in that** the openings (11) are arranged perpendicular to the transport direction (12) of the conveyor belt (10).

4. Device according to claim 1, **characterised in that** the conveyor belt (10) consists of several wire elements (40) connected to one another between which the openings (11) are located.

5. Device according to claim 4, **characterised in that** the openings (11) are arranged transversely to the transport direction (12) of the conveyor belt (10).

6. Device according to one of claims 1 to 5, **characterised in that** one or more webs (14) for receiving the goods are arranged on the conveyor belt (10).

7. Device according to claim 6, **characterised in that** the conveyor belt (10) consists of several item carriers (16) which have the openings (11) and each comprise one or more webs (14).

8. Device according to one of claims 1 to 7, **characterised in that** the conveyor belt (10) is designed to be circumferential.

9. Device according to one of claims 1 to 8, **characterised in that** the conveyor belt (10) is driven by laterally arranged drive chains (15).

## Revendications

1. Dispositif pour le transport précis, à positionnement exact, d'objets en verre sensibles,
avec un système de transport comprenant un tapis transporteur (10) sur lequel peuvent être disposés des objets en verre,
sachant que le tapis transporteur (10) présente des orifices (11) permettant un échange d'air et de température entre l'environnement et les objets en verre présents sur le tapis transporteur (10),
**caractérisé en ce que**
les orifices (10) sont réalisés sous la forme de trous oblongs (13) disposés longitudinalement ou transversalement par rapport à la direction de transport (12) du tapis transporteur (10),
trous qui sont disposés dans le tapis transporteur (10) de sorte que la circulation de la chaleur à l'intérieur du matériau du tapis transporteur (10) ne soit pas gênée ou interrompue par ces orifices (11), mais qu'elle puisse avoir lieu sans obstacle aussi bien en direction longitudinale (21) qu'en direction transversale (22) du tapis transporteur (10).

2. Dispositif selon la revendication 1, **caractérisé en ce que** les orifices (11) sont configurés sous forme de plusieurs rangs (31) mutuellement parallèles de trous oblongs (30).

3. Dispositif selon la revendication 2, **caractérisé en ce que** les orifices (11) sont disposés perpendiculairement à la direction de transport (12) du tapis transporteur (10).

4. Dispositif selon la revendication 1, **caractérisé en ce que** le tapis transporteur (10) se compose de plusieurs éléments filaires (40) reliés entre eux, entre lesquels se trouvent les orifices (11).

5. Dispositif selon la revendication 4, **caractérisé en ce que** les orifices (11) sont disposés transversalement à la direction de transport (12) du tapis transporteur (10).

6. Dispositif selon l'une des revendications 1 à 5, **caractérisé en ce que** sont disposées contre le tapis transporteur (10) une ou plusieurs nervures (14) destinées à recevoir les objets.

7. Dispositif selon la revendication 6, **caractérisé en ce que** le tapis transporteur (10) se compose de plusieurs supports d'article (16) présentant les orifices (11) et comprenant respectivement une ou plusieurs nervures (14).

8. Dispositif selon l'une des revendications 1 à 7, **caractérisé en ce que** le tapis transporteur (10) est configuré circulant en circuit fermé.

9. Dispositif selon l'une des revendications 1 à 8, **caractérisé en ce que** le tapis transporteur (10) est entraîné par des chaînes d'entraînement (15) disposées latéralement.
